# EUROPEAN PATENT SPECIFICATION

(11) **EP 4 304 346 B1**
(45) Date of publication and mention of the grant of the patent: **30.04.2025**
(21) Application number: 22735104.6
(22) Date of filing: 10.06.2022
(51) Int. Cl.: A01K 61/00

(54) **AN AQUAFARMING TANK FOR GROWING WATER-LIVING SPECIES AND A METHOD OF CONSTRUCTING THE AQUAFARMING TANK**
FISCHFARM TANK ZUM ZUCHTEN VON WASSERSPEZIES UND VERFAHREN ZUM BAUEN DES TANKS
RÉSERVOIR PISCICOLE POUR L'ÉLEVAGE D'ESPÈCES AQUATIQUES ET MÉTHODE DE CONSTRUCTION ASSOCIÉE

(30) Priority: 14.06.2021 SE 2150766
(43) Date of publication of application: 17.01.2024
(73) Proprietor: Fürstenberg Amfi LTD, 1011 Riga (LV)
(72) Inventor: FÜRSTENBERG-RYSJEDAL, Svein A., 5252 Söreidgrend (NO)
(74) Representative: Zacco Sweden AB
(86) International application number: PCT/EP2022/065858
(87) International publication number: WO 2022/263321

(56) References cited:
- EP-A1- 2 976 395
- EP-B1- 2 976 395
- WO-A1-2019/172776
- JP-A- 2001 277 388
- JP-A- H0 474 596

## Description

### Technical field

The present disclosure relates to an aquafarming tank for growing water-living species and a method of constructing the aquafarming tank. More specifically, the disclosure relates to an aquafarming tank for growing water-living species and a method of constructing the aquafarming tank as defined in the introductory parts of the independent claims.

### Background art

Aquafarming is mostly performed in oceans, lakes and ponds where e.g. fish is grown in an often industrial manner. In small scale, such aquafarming is a great and environmentally sound way of producing food. However, when the scale of the production becomes too large, aquafarming becomes a liability to the environment providing the water with so much residues that it becomes polluted. The scale of aquafarming in natural water thereby has a natural limit set by how much residues the environment can take care of. To increase production from aquafarming beyond that limit it has in recent years become increasingly popular to set up land based aquafarming in tanks.

A prior art solution in the filed can be found in the patent document WO2019172776A1 disclosing a net cage for farming of marine organisms, where the net cage is comprised of a main chamber to hold the marine organisms and where the net cage has further water chambers to treat the water before it is circulated back to the main chamber. Another prior art solution in the field can be found in the patent document JP2001277388A disclosing a partition board made up of a three-tier fiber-reinforced hollow structure consisting of a honeycomb core with hollow parts of a thermoplastic resin arranged in parallel, an intermediate layer which is formed by integrating reinforcing fibers with a thermosetting resin in one piece and covers the outer periphery of the core and an outer layer of the thermoplastic resin covering the intermediate layer. A still further example of prior art in the field can be found in JP 404074596A disclosing waste water tank with an outer peripheral side wall implanted in a loop-shape concrete base and a plurality of foundation piles are driven in the center part of the conical circular installation surface surrounded by the outer peripheral side wall and a flat disc-shape concrete fixing stand is anchored thereon. A rubber sheet with thickness of about 1 mm is closely applied to the bottom surface from the fixing stand to the inner perphery of the outer peripheral side wall 4 and the inner peripheral surface of the outer peripheral side wall 4 to form a tub-shape tank body.

Land based tanks for aquafarming often have problems of being expensive as they need to be constructed to stand for the heavy load of large volumes of water. A need to keep the surfaces of the tank clean also presents a problem not present in aquafarming in natural watercourses.

A further problem with land based aquafarming is that the water in the tanks has to be kept clean and oxygenated to a correct level. This can be solved by placing the tanks close to a large watercourse or ocean and simply constantly replacing the water. However, such locations are often fairly inaccessible making it expensive to bring building material for large tanks to the site for the aquafarming.

There is thus a need in the industry for better solutions when moving aqua farming onto land.

### Summary

It is an object of the present disclosure to mitigate, alleviate or eliminate one or more of the above-identified deficiencies and disadvantages in the prior art and solve at least the above mentioned problem. According to a first aspect there is provided an aquafarming tank for growing species that live in water, the aquafarming tank comprising: a wall shaped as a bowl so as to enable containment of a liquid. The wall comprises a structural bearing wall element and a first sheet for providing an inner layer of the wall. The first sheet of the wall is attached to the structural bearing wall element and adapted to be in contact with the liquid contained in the aquafarming tank. The first sheet of the wall is made of a solid surface material composed of aluminium trihydrate or aluminium monohydrate and a polymer binding medium.

The solid surface material is antiseptic reducing the need for cleaning and presenting surface that is not harmful for the species, e.g. fish, that is grown in the tank. By only using the solid surface material as an inner layer and using the structural bearing wall element to handle the load of the liquid, the amount of solid surface material can be reduced, keeping price and weight of the tank down.

Any water-living species may be grown in the tank. It could be marine species, anadromous species, or fresh water species. The species could be fish, any other water-living animal or plant based species that live in water.

The polymer binding medium is an acryl-modified polyester. ATH or AMH and a polymer are so similar to each other in their chemical structure so that, when the solid surface material has cured, it will not absorb liquids or other chemical agents. The material is so insensitive to other substances that it can even stand most acids without being stained or absorbing any of it. This has the effect that the aquafarming tank will be easy to clean, and since it does not absorb other substances easily it will have an antiseptic property. This makes the aquafarming tank durable with a long lifetime which will bring down maintenance costs to a minimum.

The solid surface material has an ATH or an AMH content of above 50%. According to some embodiments, the solid surface material has a ATH or AMH content of 50 - 90% by weight, more preferably 60 - 80% by weight and most preferably 70-80% by weight. A high ratio of ATH or AMH to binder material will give the material good heat resistance and also make it so dense that it has excellent antiseptic properties. Having 80% ATH or AMH to binder in the solid surface material, the material will withstand temperatures of up to 200°C, which is very good from a fire safety perspective.

According to some embodiments, the first sheet of the wall has a thickness in the range of 3 to 13 mm. Using a relatively thin first sheet keeps weight and costs down while still presenting the advantageous properties discussed above towards the content of the tank. It may be important with a minimized weight as aquafarming tanks many timed advantageously are built at inaccessible places to which transportation may be difficult.

According to some embodiments, the structural bearing wall element is made of concrete. Concrete is suitable as the structural bearing wall element as it is strong, durable, fairly inexpensive and easy to mold. The downside is that the material is heavy, but in some cases sand can be found locally at the chosen site for the aquafarming tank.

According to some embodiments, the inner side of the concrete structural bearing wall element is covered by a honeycomb structure plate that is attached to the first sheet, wherein the honeycomb structure plate has columnar cells extending in a direction perpendicular to the first sheet. The honeycomb structure plate may have a thickness about 15-25 mm. The purpose is to present a rigid surface that does not move due to heat expansion etc. so that the solid surface sheet is dot damaged by cracks during the lifetime of the aquafarming tank.

According to some embodiments, the structural bearing wall element is a honeycomb structure plate with columnar cells extending in a direction perpendicular to the first sheet. The honeycomb structure plate thereby replaces the concrete of the previously mentioned embodiment as structural bearing wall element. As honeycomb materials are lightweight while extremely torsionally rigid, a stable foundation for the first layer of solid state material is provided while having a very small weight compared to a concrete based tank. Transportation of the building material for the tank is thereby much easier.

According to some embodiments, the wall has a sandwich construction the aquafarming comprises the structural bearing wall element made of the honeycomb structure plate; the first sheet for providing an inner layer of the wall attached to the inner side of the structural bearing wall element; a second sheet for providing an outer layer of the wall attached to the outer side of the structural bearing wall element. The wall of the tank is thus built up by a sandwich structure with the first sheet towards the inside of the tank is made of solid state material, the middle part is made by honeycomb material. The outer second sheet does not have to be solid surface material. It could be any sheet material, preferably plastic or metal.

According to some embodiments, the honeycomb structure plate has a thickness in the range of 10 to 100 mm. If the honeycomb structure plate act as the structural bearing wall element, then the honeycomb structure plate preferably is 20 to 100 mm thick to make the wall extremely torsionally rigid. If the structural bearing wall element, and the honeycomb material is only supporting the solid surface material, then the plat can be 5 to 25 mm thick.

According to some embodiments, the honeycomb structure plate is constructed by aluminium or plastic to present a durable, corrosion free and lightweight honeycomb material.

According to some embodiments, the honeycomb structure plate has columnar cells that are hexagonal in shape, a shape that has proven strong in nature.

According to some embodiments, the first sheet, the honeycomb structure plate and the first sheet, or the sandwich construction of the wall is comprised by a bottom wall element; and plural side wall elements. The parts are connected via bottom connection profiles shaped to lockingly engage the side wall elements with the bottom wall element. Further, side connection profiles shaped to lockingly engage one side wall element with another side wall element are used.

The bottom connection profiles and the side connection profiles are preferably made of aluminium to present light weight connection parts that are durable and have low maintenance needs.

According to some embodiments, the bottom wall element comprises at least one edge profile and the plural side wall elements further comprises at least one edge profile arranged at the edges of the bottom wall element and the plural side wall elements for engaging with the bottom connection profiles or the side connection profiles. The edge profiles are securely integrated in the bottom wall elements or side wall elements and preferably made from the same material as the side connection profiles and the bottom connection profiles to avoid corrosion, preferably aluminium or plastic.

According to some embodiments, aquafarming tank has a cylindrical shape; a number n planar side wall elements; and a bottom wall element that has a shape with n edges for receiving the n planar side wall elements via the bottom connection profiles to build the tank shape from a number of smaller element. That makes transportation easier when building the aquafarming tank.

According to some embodiments, the bottom wall element is constructed by a number of rectangular bottom wall elements and a number of triangular bottom wall elements to form a bottom wall element. The bottom wall element is thereby constructed by a number of smaller part making transportation easier.

According to some embodiments, the planar side wall elements are substantially rectangular to produce a vertical tank side wall. However, the side wall elements may also be trapezoidal or triangular to produce a tank side wall leaning outwards or inwards.

According to a second aspect there is provided a method of constructing the aquafarming tank according to the first aspect, the method comprising the steps of: constructing a mould arranged to receive the honeycomb structure plates and the first sheet with a distance D between the mould and the honeycomb structure plates; mounting the honeycomb structure plates and the first sheet with a distance D between the mould and the honeycomb structure plates using the bottom connection profiles and the side connection profiles. Concrete is then moulded in the mould between the mould and the honeycomb structure plates. When the concrete is hardened the mould may optionally be removed.

Effects and features of the second aspect are to a large extent analogous to those described above in connection with the first aspect. Embodiments mentioned in relation to the first aspect are largely compatible with the second aspect.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a perspective view of an aquafarming tank according to an embodiment of the present disclosure.
Figure 2 shows a perspective view of an aquafarming tank according to embodiment of the present disclosure where the structural bearing wall element is made of concrete.
Figure 3 shows a cross-sectional drawing of two side wall elements locked together by side connection profiles.
Figures 4a and 4b show cross-sectional drawings of a side wall element and a different connection profile than in Figure 3.
Figure 5 shows a cross-sectional drawing of a side wall elements locked together with a bottom wall element by a bottom connection profile.
Figure 6a shows shapes from three bottom wall elements and one side wall element for constructing the aquafarming tank shown in Figure 6c.
Figures 6b shows a bottom wall of an aquafarming tank built by the three elements to the left in Figure 6a.
Figure 6c shows an aquafarming tank built by the four elements of Figure 6a.
Figure 7 is a flow chart representing a method according to the present disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

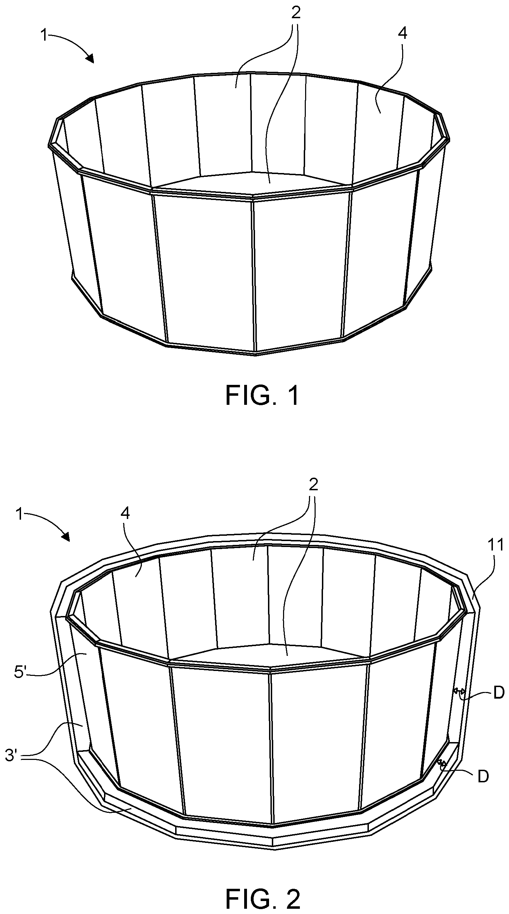

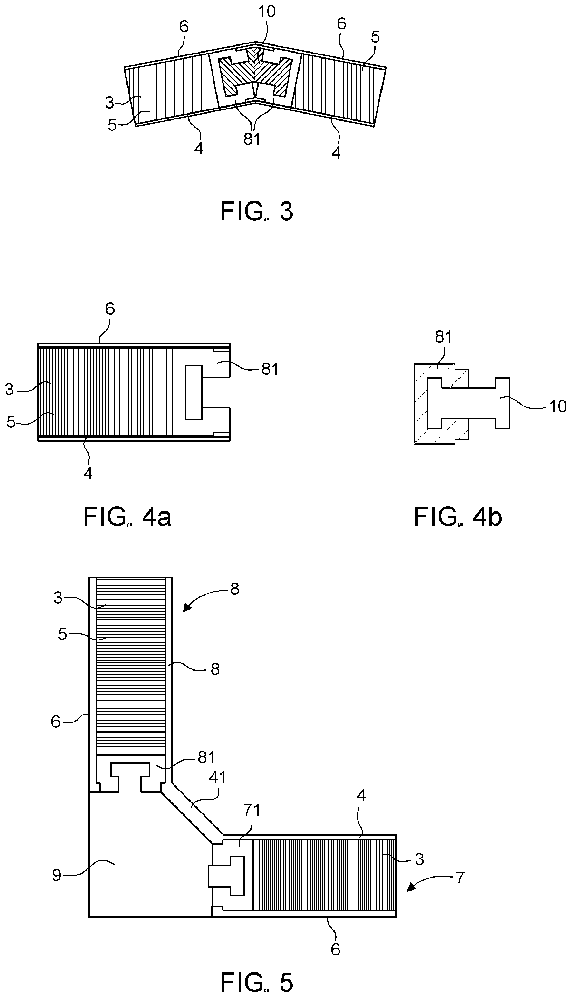

Figure 1 shows an example of the first aspect of this disclosure disclosing an aquafarming tank 1 for growing water-living species, e.g. fish. The aquafarming tank 1 comprises a wall 2 shaped as a bowl so as to enable containment of a liquid. With reference to Figures 2-5, the wall 2 comprises a structural bearing wall element 3,3', and a first sheet 4 for providing an inner layer of the wall 2. The first sheet 4 of the wall 2 is attached to the structural bearing wall element 3,3' and adapted to be in contact with the liquid contained in the aquafarming tank 1. The first sheet 4 of the wall 2 is made of a solid surface material composed of aluminium trihydrate ATH or aluminium monohydrate AMH and a polymer binding medium. The solid surface material presents a very dense surface to the water which is hard to penetrate for any substance, which has the effect that the surface has antiseptic properties. The solid surface material of the first sheet preferably has an ATH or an AMH content of above 50%. The first sheet 4 of the wall 2 has a thickness in the range of 3 to 13 mm. As seen in Figures 3, 4a, 4b and 5, the first sheet is thin in relation to the structural bearing wall element 3.

In Figure 2 the structural bearing wall element 3' is made of concrete. The inner side of the concrete structural bearing wall element 3' is covered by a honeycomb structure plate 5' that is attached to the first sheet 4, wherein the honeycomb structure plate 5' has columnar cells extending in a direction perpendicular to the first sheet 4. The thickness of the honeycomb plate in Figure 2 is in the 15-25mm. In Figure 2 the concrete structural bearing wall element 3' is cut away to show the honeycomb structure plate 5' behind it. The mould 11, used for moulding the concrete structural bearing wall element 3' is also disclosed and cut away in the front part of the drawing. The mould 11 may be removed after moulding or it can be kept as an outermost layer of the aquafarming tank as protection of the concrete or just for a better or different visual appearance.

In Figures 1, 3, 4a, 4b and 5 the structural bearing wall element is a honeycomb structure plate 5 with columnar cells extending in a direction perpendicular to the first sheet 4. The wall has a sandwich construction made of the honeycomb structure plate 5, the first sheet 4 for providing an inner layer of the wall 2 attached to the inner side of the structural bearing wall element 3 and a second sheet 6 for providing an outer layer of the wall 2 attached to the outer side of the structural bearing wall element 3. The second sheet 6 does not have to be solid surface material. It could be any sheet material, preferably plastic or metal to provide an outer surface of the aquafarming tank that has low maintenance needs.

The honeycomb structure plate 5,5' has a thickness in the range of 10 to 100 mm. In Figure 2, where the structural bearing wall element 3' is made of concrete, the thickness of the honeycomb structure plate 5' is in the lower region of the interval as the structural bearing function of the aquafarming tank is achieved by the concrete structural bearing wall element 3'. In Figures 1, 3, 4a, 4b and 5, the thickness of the honeycomb structure plate 5' is preferably 20 to 100 mm to make the wall extremely torsionally rigid

The honeycomb structure plate 5,5' in all embodiments is constructed by aluminium. However, it could be constructed by other lightweight and strong materials as carbon fibre materials or plastic. The honeycomb structure plate 5,5' has columnar cells that are hexagonal in shape (not shown).

With reference to Figures3, 4a, 4b, 5, 6a, 6b and 6c is disclosed how the wall 2 of the aquafarming tank can be divided into wall elements that can be built into a compete wall. The reason to have smaller parts is to make transportation of the aquafarming tank wall easer. The bottom wall element 7 and plural side wall elements 8 are connected via bottom connection profiles 9 shaped to lockingly engage the side wall elements 8 with the bottom wall element 7 and side connection profiles 10 shaped to lockingly engage one side wall element 8 with another side wall element 8. the bottom wall element 7 comprises at least one edge profile 71 and the plural side wall elements 8 further comprises at least one edge profile 81 arranged at the edges of the bottom wall element 7 and the plural side wall elements 8 for engaging with the bottom connection profiles 9 or the side connection profiles 10. The aquafarming tank 1 has a cylindrical shape with a number n planar side wall elements 8 and a bottom wall element 7 that has a shape with n edges for receiving the n planar side wall elements via the bottom connection profiles 9.

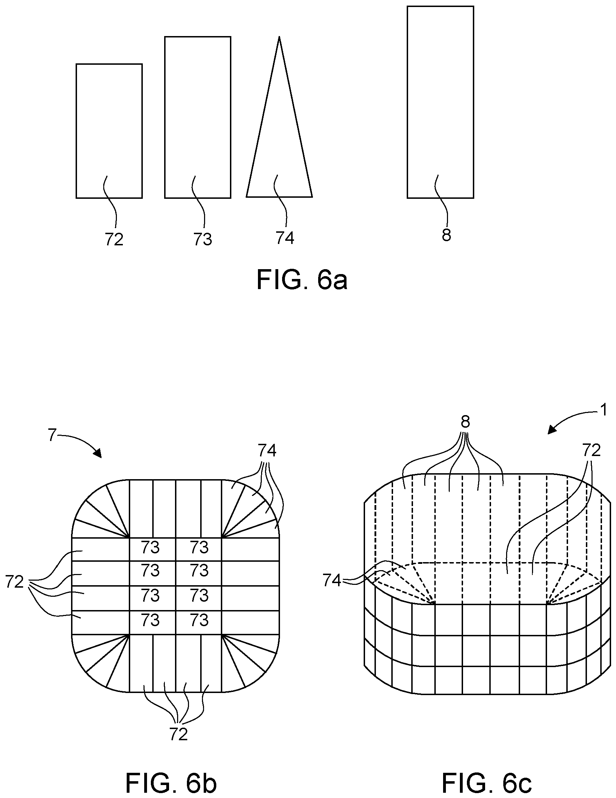

With reference to Figures 6a and 6b the bottom wall element 7 is constructed by a number of rectangular bottom wall elements 72,73 and a number of triangular bottom wall elements 74 to form a bottom wall element 7 that resembles a rectangle with rounded corners. The planar side wall elements 8 are substantially rectangular.

With reference to Figure 6c an aquafarming tank is disclosed with the bottom 7 of Figure 6b and the side wall elements 8 of Figure 6a. An aquafarming tank is thus achieved by a large number of smaller sections making transportation of the parts for the aquafarming tank easy.

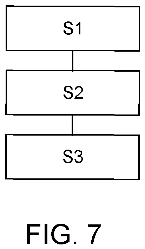

Figure 7 discloses the second aspect of this disclosure. The flow diagram represents a method of constructing the aquafarming tank of the first and comprises the steps of: constructing S1 a mould 11 arranged to receive the honeycomb structure plates 5,5' and the first sheet 4 with a distance D (see Figure 2) between the mould and the honeycomb structure plates; mounting S2 the honeycomb structure plates 5,5' and the first sheet 4 with a distance D between the mould 11 and the honeycomb structure plates 5,5' using the bottom connection profiles and the side connection profiles; moulding S3 concrete in the mould 11 between the mould 11 and the honeycomb structure plates 5,5'.

The person skilled in the art realizes that the present disclosure is not limited to the preferred embodiments described above. The person skilled in the art further realizes that modifications and variations are possible within the scope of the appended claims. For example, a person skilled in the art understands that other shapes of the side wall elements and the bottom wall elements can be used as long as they are possible to mount to the desired aquafarming tank shape, while still providing the benefit of easier transportation of the parts for the aquafarming tank. A person skilled in the art also realizes that the honeycomb material may be replaced by another rigid plate, especially if using a concrete structural bearing wall element. The skilled person realizes that many combinations of the presented embodiments are feasible, e.g. the concrete wall elements could be pre-fabricated with the inner sheet of solid surface material attached and provided as planar side wall elements and bottom wall elements. No moulding would then be required on site, i.e. the mould 11 does not have to be constructed on site. Finished concrete sections would instead be transported to the site for the aquafarming tank. Additionally, variations to the disclosed embodiments can be understood and effected by the skilled person in practicing the claimed disclosure, from a study of the drawings, the disclosure, and the appended claims.

## Claims

1. An aquafarming tank (1) for growing species that live in water, the aquafarming tank (1) comprising:
a wall (2) shaped as a bowl so as to enable containment of a liquid;
wherein the wall (2) comprises
a structural bearing wall element (3, 3'); and
a first sheet (4) for providing an inner layer of the wall (2);
wherein the first sheet (4) of the wall (2) is attached to the structural bearing wall element (3, 3') and adapted to be in contact with the liquid contained in the aquafarming tank (1); and
**characterised in that**
the first sheet (4) of the wall (2) is made of a solid surface material composed of aluminium trihydrate (ATH) or aluminium monohydrate (AMH) and a polymer binding medium,
wherein the solid surface material contains ATH or AMH to an extent of above 50%.

2. The aquafarming tank (1) according to claim 1, wherein the first sheet (4) of the wall (2) has a thickness in the range of 3 to 13 mm.

3. The aquafarming tank (1) according to any one of claims 1-2, wherein the structural bearing wall element (3') is made of concrete.

4. The aquafarming tank (1) according to claim 3, wherein the inner side of the concrete structural bearing wall element (3) is covered by a honeycomb structure plate (5) that is attached to the first sheet (4), wherein the honeycomb structure plate (5) has columnar cells extending in a direction perpendicular to the first sheet (4).

5. The aquafarming tank (1) according to any one of claims 1-2, wherein the structural bearing wall element is a honeycomb structure plate (5') with columnar cells extending in a direction perpendicular to the first sheet (4).

6. The aquafarming tank (1) according to claim 5, wherein the wall has a sandwich construction comprising
the structural bearing wall element (3) made of the honeycomb structure plate (5');
the first sheet (4) for providing an inner layer of the wall (2) attached to the inner side of the structural bearing wall element (3);
a second sheet (6) for providing an outer layer of the wall (2) attached to the outer side of the structural bearing wall element (3).

7. The aquafarming tank (1) according to any one of claims 4-6, wherein the honeycomb structure plate (5, 5') has a thickness in the range of 10 to 100 mm.

8. The aquafarming tank (1) according to any one of claims 4-7, wherein the honeycomb structure plate (5, 5') is constructed by aluminium.

9. The aquafarming tank (1) according to any one of claims 4-8, wherein the honeycomb structure plate (5, 5') has columnar cells that are hexagonal in shape.

10. The aquafarming tank (1) according to any one of the preceding claims, wherein the wall (2) is comprised by
a bottom wall element (7); and
plural side wall elements (8);
wherein the the bottom wall element (7) and the plural side wall elements (8) are connected via bottom connection profiles (9) shaped to lockingly engage the side wall elements (8) with the bottom wall element (7); and side connection profiles (10) shaped to lockingly engage one side wall element (8) with another side wall element (8).

11. The aquafarming tank (1) according to claim 10, wherein the bottom wall element (7) comprises at least one edge profile (71) and the plural side wall elements (8) further comprises at least one edge profile (81) arranged at the edges of the bottom wall element (7) and the plural side wall elements (8) for engaging with the bottom connection profiles (9) or the side connection profiles (10).

12. The aquafarming tank (1) according to claim 10, wherein aquafarming tank (1) has a cylindrical shape; a number n planar side wall elements (8); and a bottom wall element (7) that has a shape with n edges for receiving the n planar side wall elements via the bottom connection profiles (9).

13. The aquafarming tank (1) according to claim 10 or 11, wherein the bottom wall element (7) is constructed by a number of rectangular bottom wall elements (72, 73) and a number of triangular bottom wall elements (74) to form a bottom wall element (7).

14. The aquafarming tank (1) according to any one of claims 10 or 12, wherein the planar side wall elements (8) are substantially rectangular.

15. A method of constructing the aquafarming tank (1) according to any one of claims 4, or 6-12, the method comprising the steps of:
constructing (S1) a mould (11) arranged to receive the honeycomb structure plates (5, 5') and the first sheet (4) with a distance D between the mould and the honeycomb structure plates;
mounting (S2) the honeycomb structure plates (5, 5') and the first sheet (4) with a distance D between the mould (11) and the honeycomb structure plates (5, 5');
moulding (S3) concrete in the mould (11) between the mould (11) and the honeycomb structure plates (5, 5').

## Patentansprüche

1. Aquafarmingtank (1) zum Züchten von Spezies, die im Wasser leben, wobei der Aquafarmingtank (1) Folgendes umfasst:
eine Wand (2), die wie eine Schale geformt ist, um Eindämmung einer Flüssigkeit zu ermöglichen;
wobei die Wand (2) Folgendes umfasst:
ein strukturelles Stützwandelement (3, 3'); und
eine erste Lage (4) zum Bereitstellen einer inneren Schicht der Wand (2);
wobei die erste Lage (4) der Wand (2) an das strukturelle Stützwandelement (3, 3') angebracht und dazu ausgelegt ist, in Kontakt mit der Flüssigkeit zu stehen, die in dem Aquafarmingtank (1) eingedämmt ist; und
**dadurch gekennzeichnet, dass**
die erste Lage (4) der Wand (2) aus einem festen Oberflächenmaterial hergestellt ist, das aus Aluminiumtrihydrat (ATH) oder Aluminiummonohydrat (AMH) und einem Polymerbindemedium besteht,
wobei das feste Oberflächenmaterial ATH oder AMH bis zu einer Menge über 50 % enthält.

2. Aquafarmingtank (1) nach Anspruch 1, wobei die erste Lage (4) der Wand (2) eine Dicke in dem Bereich von 3 bis 13 mm aufweist.

3. Aquafarmingtank (1) nach einem der Ansprüche 1-2, wobei das strukturelle Stützwandelement (3') aus Beton hergestellt ist.

4. Aquafarmingtank (1) nach Anspruch 3, wobei die innere Seite des strukturellen Stützwandbetonelements (3) durch eine Honigwabenstrukturplatte (5) abgedeckt ist, die an der ersten Lage (4) angebracht ist, wobei die Honigwabenstrukturplatte (5) säulenförmige Zellen aufweist, die sich in einer Richtung senkrecht zu der ersten Lage (4) erstrecken.

5. Aquafarmingtank (1) nach einem der Ansprüche 1-2, wobei das strukturelle Stützwandelement eine Honigwabenstrukturplatte (5') mit säulenförmigen Zellen ist, die sich in einer Richtung senkrecht zu der ersten Lage (4) erstrecken.

6. Aquafarmingtank (1) nach Anspruch 5, wobei die Wand eine Sandwichkonstruktion aufweist, die Folgendes umfasst:
das strukturelle Stützwandelement (3), das aus der Honigwabenstrukturplatte (5') hergestellt ist;
die erste Lage (4) zum Bereitstellen einer inneren Schicht der Wand (2), die an der inneren Seite des strukturellen Stützwandelements (3) angebracht ist;
eine zweite Lage (6) zum Bereitstellen einer äußeren Schicht der Wand (2), die an der äußeren Seite des strukturellen Stützwandelements (3) angebracht ist.

7. Aquafarmingtank (1) nach einem der Ansprüche 4-6, wobei die Honigwabenstrukturplatte (5, 5') eine Dicke in dem Bereich von 10 bis 100 mm aufweist.

8. Aquafarmingtank (1) nach einem der Ansprüche 4-7, wobei die Honigwabenstrukturplatte (5, 5') aus Aluminium konstruiert ist.

9. Aquafarmingtank (1) nach einem der Ansprüche 4-8, wobei die Honigwabenstrukturplatte (5, 5') säulenförmige Zellen mit einer hexagonalen Form aufweist.

10. Aquafarmingtank (1) nach einem der vorhergehenden Ansprüche, wobei die Wand (2) Folgendes umfasst:
ein Bodenwandelement (7); und
mehrere Seitenwandelemente (8);
wobei das Bodenwandelement (7) und die mehreren Seitenwandelemente (8) über Bodenverbindungsprofile (9) verbunden sind, die eine Form aufweisen, um die Seitenwandelemente (8) mit dem Bodenwandelement (7) verriegelnd in Eingriff zu bringen; und wobei die Seitenverbindungsprofile (10) eine Form aufweisen, um ein Seitenwandelement (8) mit einem anderen Seitenwandelement (8) verriegelnd in Eingriff zu bringen.

11. Aquafarmingtank (1) nach Anspruch 10, wobei das Bodenwandelement (7) mindestens ein Kantenprofil (71) umfasst und die mehreren Seitenwandelemente (8) ferner mindestens ein Kantenprofil (81) umfassen, das an den Kanten des Bodenwandelements (7) angeordnet ist, und wobei die mehreren Seitenwandelemente (8) zum Ineingriffnehmen der Bodenverbindungsprofile (9) oder der Seitenverbindungsprofile (10) dienen.

12. Aquafarmingtank (1) nach Anspruch 10, wobei der Aquafarmingtank (1) eine zylindrische Form; eine Anzahl n an planaren Seitenwandelementen (8); und ein Bodenwandelement (7), das eine Form mit n Kanten zum Aufnehmen der n planaren Seitenwandelemente über die Bodenverbindungsprofile (9) aufweist, aufweist.

13. Aquafarmingtank (1) nach Anspruch 10 oder 11, wobei das Bodenwandelement (7) aus einer Anzahl an rechteckigen Bodenwandelementen (72, 73) und einer Anzahl an dreieckigen Bodenwandelementen (74) konstruiert ist, um ein Bodenwandelement (7) zu bilden.

14. Aquafarmingtank (1) nach einem der Ansprüche 10 oder 12, wobei die planaren Seitenwandelemente (8) im Wesentlichen rechteckig sind.

15. Verfahren zum Konstruieren des Aquafarmingtanks (1) nach einem der Ansprüche 4 oder 6-12, wobei das Verfahren die folgenden Schritte umfasst:
Konstruieren (S1) einer Gussform (11), die angeordnet ist, um die Honigwabenstrukturplatten (5, 5') und die erste Lage (4) mit einem Abstand D zwischen der Gussform und den Honigwabenstrukturplatten aufzunehmen;
Montieren (S2) der Honigwabenstrukturplatten (5, 5') und der ersten Lage (4) mit einem Abstand D zwischen der Gussform (11) und den Honigwabenstrukturplatten (5, 5');
Gießen (S3) von Beton in die Gussform (11) zwischen der Gussform (11) und den Honigwabenstrukturplatten (5, 5').

## Revendications

1. Bassin aquacole (1) pour l'élevage d'espèces vivant dans l'eau, le bassin aquacole (1) comprenant :
une paroi (2) en forme de cuvette de manière à permettre le confinement d'un liquide ;
dans lequel la paroi (2) comprend
un élément de paroi porteuse structurelle (3, 3') ; et
une première feuille (4) destinée à constituer une couche intérieure de la paroi (2) ;
dans lequel la première feuille (4) de la paroi (2) est fixée à l'élément de paroi porteuse structurelle (3, 3') et adaptée pour être en contact avec le liquide contenu dans le bassin aquacole (1) ; et
**caractérisé en ce que**
la première feuille (4) de la paroi (2) est constituée d'un matériau de surface solide composé de trihydrate d'aluminium (ATH) ou de monohydrate d'aluminium (AMH) et d'un liant polymère,
dans lequel le matériau de surface solide contient de l'ATH ou de l'AMH dans une mesure supérieure à 50 %.

2. Bassin aquacole (1) selon la revendication 1, dans lequel la première feuille (4) de la paroi (2) a une épaisseur comprise entre 3 et 13 mm.

3. Bassin aquacole (1) selon l'une quelconque des revendications 1 à 2, dans lequel l'élément de paroi porteuse structurelle (3') est fait de béton.

4. Bassin aquacole (1) selon la revendication 3, dans lequel le côté intérieur de l'élément de paroi porteuse structurelle en béton (3) est recouvert par une plaque de structure en nid d'abeille (5) qui est fixée à la première feuille (4), la plaque de structure en nid d'abeille (5) comportant des cellules colonnaires s'étendant dans une direction perpendiculaire à la première feuille (4).

5. Bassin aquacole (1) selon l'une quelconque des revendications 1 à 2, dans lequel l'élément de paroi porteuse structurelle est une plaque de structure en nid d'abeille (5') avec des cellules colonnaires s'étendant dans une direction perpendiculaire à la première feuille (4).

6. Bassin aquacole (1) selon la revendication 5, dans lequel la paroi présente une construction en sandwich comprenant
l'élément de paroi porteuse structurelle (3) constitué de la plaque de structure en nid d'abeille (5') ;
la première feuille (4) pour constituer une couche intérieure de la paroi (2) fixée sur le côté intérieur de l'élément de paroi porteuse structurelle (3) ;
une seconde feuille (6) pour constituer une couche extérieure de la paroi (2) fixée sur le côté extérieur de l'élément de paroi porteuse structurelle (3).

7. Bassin aquacole (1) selon l'une quelconque des revendications 4 à 6, dans lequel la plaque de structure en nid d'abeille (5, 5') a une épaisseur comprise entre 10 et 100 mm.

8. Bassin aquacole (1) selon l'une quelconque des revendications 4 à 7, dans lequel la plaque de structure en nid d'abeille (5, 5') est construite en aluminium.

9. Bassin aquacole (1) selon l'une quelconque des revendications 4 à 8, dans lequel la plaque de structure en nid d'abeille (5, 5') comporte des cellules colonnaires de forme hexagonale.

10. Bassin aquacole (1) selon l'une quelconque des revendications précédentes, dans lequel la paroi (2) est constituée par
un élément de paroi inférieure (7) ; et
multiples éléments de paroi latérale (8) ;
dans lequel l'élément de paroi inférieure (7) et les multiples éléments de paroi latérale (8) sont reliés par l'intermédiaire de profils de connexion inférieurs (9) formés pour engager de manière verrouillée les éléments de paroi latérale (8) avec l'élément de paroi inférieure (7) ; et de profils de connexion latéraux (10) formés pour engager de manière verrouillée un élément de paroi latérale (8) avec un autre élément de paroi latérale (8).

11. Bassin aquacole (1) selon la revendication 10, dans lequel l'élément de paroi inférieure (7) comprend au moins un profil de bord (71) et les multiples éléments de paroi latérale (8) comprennent en outre au moins un profil de bord (81) disposé sur les bords de l'élément de paroi inférieure (7) et des multiples éléments de paroi latérale (8) pour s'engager avec les profils de connexion inférieurs (9) ou les profils de connexion latéraux (10).

12. Bassin aquacole (1) selon la revendication 10, dans lequel le bassin aquacole (1) présente une forme cylindrique ; un nombre n d'éléments de paroi latérale planaires (8) ; et un élément de paroi inférieure (7) qui présente une forme avec n bords pour recevoir les n éléments de paroi latérale planaires via les profils de connexion inférieurs (9).

13. Bassin aquacole (1) selon la revendication 10 ou 11, dans lequel l'élément de paroi inférieure (7) est construit par un certain nombre d'éléments de paroi inférieure rectangulaires (72, 73) et un certain nombre d'éléments de paroi inférieure triangulaires (74) pour former un élément de paroi inférieure (7).

14. Bassin aquacole (1) selon l'une quelconque des revendications 10 ou 12, dans lequel les éléments de paroi latérale planaires (8) sont sensiblement rectangulaires.

15. Procédé de construction du bassin aquacole (1) selon l'une quelconque des revendications 4 ou 6 à 12, le procédé comprenant les étapes consistant à :
construire (S1) un moule (11) agencé pour recevoir les plaques de structure en nid d'abeille (5, 5') et la première feuille (4) avec une distance D entre le moule et les plaques de structure en nid d'abeille ;
monter (S2) les plaques de structure en nid d'abeille (5, 5') et la première feuille (4) avec une distance D entre le moule (11) et les plaques de structure en nid d'abeille (5, 5') ;
mouler (S3) le béton dans le moule (11) entre le moule (11) et les plaques de structure en nid d'abeille (5, 5').
